(19) Europäisches Patentamt
European Patent Office
Office européen des brevets

(11) Veröffentlichungsnummer: **0 056 152**
**B1**

# (12) EUROPÄISCHE PATENTSCHRIFT

(45) Veröffentlichungstag der Patentschrift: **17.04.85**

(51) Int. Cl.⁴: **D 06 M 16/00, C 11 D 3/48**

(21) Anmeldenummer: **81110798.6**

(22) Anmeldetag: **28.12.81**

(54) **Verfahren zur Nachbehandlung von Wäsche.**

(30) Priorität **09.01.81 DE 3100471**

(43) Veröffentlichungstag der Anmeldung: **21.07.82 Patentblatt 82/29**

(45) Bekanntmachung des Hinweises auf die Patenterteilung: **17.04.85 Patentblatt 85/16**

(84) Benannte Vertragsstaaten: **AT BE CH DE FR GB IT LI NL**

(56) Entgegenhaltungen: **GB - A - 1 504 425**

**Die Akte enthält technische Angaben, die nach dem Eingang der Anmeldung eingereicht wurden und die nicht in dieser Patentschrift enthalten sind.**

(73) Patentinhaber: **Henkel Kommanditgesellschaft auf Aktien, Postfach 1100 Henkelstrasse 67, D-4000 Düsseldorf-Holthausen (DE)**
Patentinhaber: **BAYER AG, Konzernverwaltung RP Patentabteilung, D-5090 Leverkusen 1 Bayerwerk (DE)**

(72) Erfinder: **Lehmann, Rudolf, Dr., Fröbelstrasse 4a, D-4040 Neuss (DE)**
Erfinder: **Bellinger, Horst, Dr., Schumannstrasse 83, D-4000 Düsseldorf (DE)**
Erfinder: **Schnegelberger, Harald, Dr., Stieglitzweg 2, D-5653 Leichlingen (DE)**

**EP 0 056 152 B1**

Anmerkung Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Es ist seit langem üblich, im Anschluß an einen Waschprozeß die Textilien, bei denen Wert auf einen weichen, vollen Griff gelegt wird, einer Nachbehandlung zu unterziehen. Hierzu wird meist dem letzten Spülwasser in einem von Hand oder in einer Waschmaschine durchgeführten Waschprozeß eine kleine Menge von Textilweichmachern zugesetzt, die auf die Wäschestücke aufziehen. Die am häufigsten verwendeten Textilweichmacher sind quartäre Ammoniumverbindungen mit zwei oder drei langkettigen Resten, die wegen ihres kationischen Charakters leicht und weitgehend vollständig auf die Textilien aufziehen. So behandelte Wäsche weist dann im allgemeinen nach dem Trocknen die vom Benutzer erwarteten Trageeigenschaften auf. In vielen Fällen genügt derart behandelte Wäsche aber nicht allen hygienischen Anforderungen; dies trifft insbesondere auf Feinwaschartikel zu, die bei niedriger Waschtemperatur gewaschen werden. Diese enthalten häufig noch Keime, die zu Infektionen führen können, besonders dann, wenn die Wäsche auf der Haut getragen wird. Zur Verbesserung der Wäschehygiene sind daher schon Vorschläge bekanntgeworden.

Aus der kanadischen Patentschrift Nr. 743 513 ist ein Wäsche-Nachbehandlungsmittel zum gleichzeitigen Weichmachen und zur germiziden Ausrüstung von Wäsche bekannt, dessen germizider Wirkstoff ein Gemisch mehrerer quartärer Ammoniumverbindungen mit einem langkettigen Rest und einem Arylrest darstellt. Die GB-A-1 508 425 betrifft ein Verfahren zur Verhinderung des Wachstums von Mikroorganismen in Wäschenachbehandlungsmitteln mit einem Gehalt an quartären Ammoniumverbindungen durch Zusatz von antimikrobiell wirksamen aliphatischen Dialdehyden oder deren Mischungen mit Alkanolaminen. Mit derartigen Mitteln behandelte Textilien zeigen aber kein gehemmtes Wachstum von Mikroorganismen.

Es hat sich nun gezeigt, daß man die hygienische Qualität von gewaschener Wäsche wesentlich verbessern kann, indem man die Nachbehandlung der Wäsche außer mit textilpflegenden quartären Ammoniumverbindungen zusätzlich mit antimikrobiell wirksamen Azolverbindungen vornimmt.

Diese Nachbehandlung von Wäsche ist daher Gegenstand der vorliegenden Erfindung.

Bei dem erfindungsgemäßen Verfahren ist die gleichzeitige Anwesenheit von wenigstens einer quartären Ammoniumverbindung und wenigstens einer antimikrobiell wirksamen Azolverbindung in der Behandlungsflotte von großer Wichtigkeit, da hierdurch neben der Verbesserung des Trage-Komforts eine ausreichende antimikrobielle Ausrüstung der Wäsche erzielt wird, die ohne die gleichzeitige Anwesenheit der quartären Ammoniumverbindung deutlich geringer ist. Dies ist um so überraschender, als die textilweichmachenden quartären Ammoniumverbindungen selbst meist keine oder nur geringe antimikrobielle Wirkung aufweisen. Der Mechanismus, mit dem die Azol-Verbindungen auf die Textilien übertragen und dort fixiert werden, ist nicht bekannt. So behandelte Wäsche bewirkt eine deutlich feststellbare Hemmwirkung besonders auf das Wachstum von Pilzen, wie sie auf der Haut vorkommen können, so daß durch das Tragen dieser Textilien vor allem eine Infektions-Prophylaxe und die Verhinderung einer weiteren Ausbreitung von Pilz-Infektionen möglich sind.

Das erfindungsgemäße Verfahren bewirkt in wäßriger Flotte mit einem Gehalt an textilweichmachenden quartären Ammoniumverbindungen und antimikrobiell wirksamen Substanzen gleichzeitig eine Weichmachung der behandelten Wäsche und deren antimikrobielle Ausrüstung. Das Verfahren besteht darin, daß man die Flotte auf die Wäschestücke einwirken läßt, die Flotte von den Wäschestücken abtrennt und die Wäsche trocknet; es ist dadurch gekennzeichnet, daß man die Wäschestücke in einer Flotte, der man zusätzlich zu wenigstens einer textilweichmachenden quartären Ammoniumverbindung als antimikrobiell wirksame Substanz wenigstens eine Azolverbindung zusetzt, bewegt.

Bei den erfindungsgemäß einzusetzenden antimikrobiell wirksamen Verbindungen handelt es sich um Azolderivate, die als Antimikrobika bekannt sind (vergl. DE-C-1 908 991, DE-A-2 007 794, DE-A-2 009 020, DE-A-2 430 039, DE-A-2 260 704). Besonders geeignete Azolverbindungen sind beispielsweise die folgenden Derivate:

a) 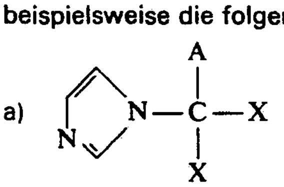 (I)

worin X die Phenylgruppe und A entweder die Gruppe $—C{\equiv}CH$ oder die Gruppe $—COOCH_3$ oder die Gruppe $—C(CH_3)_3$ bedeuten.

b) 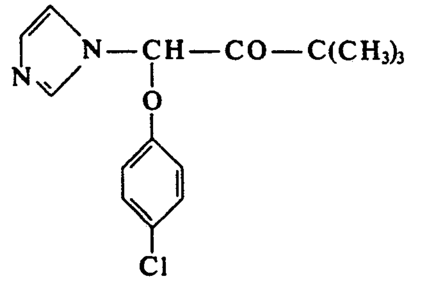 (II)

c) 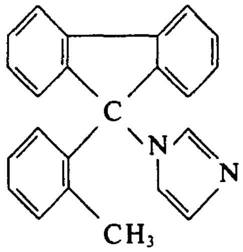 (III)

d) 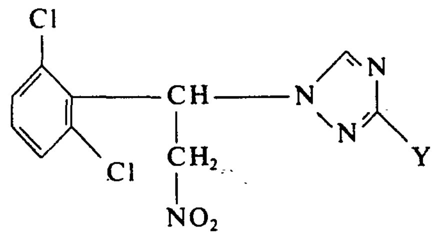 (IV)

worin Y entweder Wasserstoff oder Chlor bedeutet.

Die Natur der in dem für das erfindungsgemäße Verfahren geeigneten textilweichmachenden quartären Ammoniumverbindungen ist offenbar nicht kritisch; so haben sich beispielsweise vom Imidazolin und vom Ammoniak abgeleitete Verbindungen mit 2 oder 3 langen Alkyl-Resten, die substituiert oder durch Heteroatome unterbrochen sein können, bewährt, darunter auch das wegen seiner guten weichmachenden Wirkung weit verbreitete Dimethylditalgalkyl-ammoniumchlorid.

Für die Durchführung des erfindungsgemäßen Verfahrens setzt man die Azolverbindung in der Behandlungsflotte in Konzentrationen von etwa 0,0001 bis 1,5 Gew.-%, bezogen auf die Behandlungsflotte, ein.

Dabei werden hinsichtlich Weichmachung und antimikrobielle Ausrüstung besonders günstige Ergebnisse erhalten, wenn die Konzentration der quartären Ammoniumverbindung in der Behandlungsflotte 0,01 bis 0,5 Gew.-%, bezogen auf die Behandlungsflotte, beträgt, wobei das Gew.-Verhältnis von quartärer Ammoniumverbindung zu Azolverbindung im allgemeinen im Bereich von 50:1 bis 1:3 liegt.

Die Behandlung erfolgt indem man die Textilien in der Behandlungsflotte bei der Temperatur des Leitungswassers einige Minuten bewegt, wobei die quartäre Ammoniumverbindung und die Azolverbindung auf die Wäschestücke aufziehen. Anschließemd entfernt man die Behandlungsflotte zum größten Teil durch Auswringen oder Zentrifugieren und trocknet die Wäsche auf der Leine oder in einem Wäschetrockner. Die Wäsche weist danach einen weichen, vollen Griff und antimikrobielle Eigenschaften auf.

In modernen Waschautomaten kann man das erfindungsgemäße Verfahren automatisch ablaufen lassen, wenn man anstelle der üblichen Wäschenachbehandlungsmittel ohne antimikrobiell wirksame Azolverbindungen solche Mittel verwendet, die zusätzlich Azolverbindungen enthalten. Derartige Mittel können als einspülbare Flüssigkeiten auf wäßriger oder wäßrig alkoholischer Basis oder auf Basis von ausschließlich organischen Lösungsmitteln aufgebaut sein und zusätzlich Hilfsstoffe wie zum Beispiel Farb- und Duftstoffe, Dispergatoren, Konservierungsmittel, Konsistenzgeber enthalten. Es ist aber auch möglich, die Antimikrobika getrennt von den üblichen Wäschenachbehandlungsmitteln der Behandlungsflotte in den genannten Konzentrationen zuzusetzen, in diesem Fall ist ein Zusatz in Form einer wäßrigen oder nichtwäßrigen mit Wasser mischbaren Lösung oder Dispersion besonders vorteilhaft.

## Beispiele

Zur Prüfung der antimikrobiellen Wirksamkeit wurde die erfindungsgemäße Ausrüstung der Textilien wie folgt vorgenommen:

2 × 2 cm große Textilstücke aus Baumwollköper (BW), Wolle (WO) und Nylon (NY) wurden in einer Behandlungsflotte von 20°C 10 Minuten lang bewegt und anschließend bei Raumtemperatur getrocknet. Der Behandlungsflotte waren verschiedene Azolverbindungen in unterschiedlicher Konzentration (s. Tabelle) und 3 g pro 1 Waschflotte eines handelsüblichen Wäscheweichspülmittels mit einem Gehalt an 5 Gew.-% Dimethyl-ditalgalkyl-ammoniumchlorid als textilweichmachender quartärer Ammoniumverbindung zugesetzt. Die Textilproben wurden auf mit unterschiedlichen Testkeimen beimpfte Agarplatten aufgelegt, bis zum Eintritt eines vollen Wachstums bei 30°C bebrütet und dann die antimikrobiellen Effekte abgelesen. Dabei bedeuten:

+ = volles Wachstum
O = kein Hemmhof, kein Wachstum auf den Läppchen

Zahl = Hemmhof in mm um das Gewebe
(Zahl) = Größe des Hemmhofes mit diffuser Begrenzung in mm.

Zum Vergleich wurde die antimikrobielle Wirkung eines azolverbindungsfreien Wäschenachbehandlungsmittels geprüft. Die Ergebnisse sind in der folgenden Tabelle aufgeführt:

| Beisp. Nr. | Antimikr. Substanz | Anwend. Konzentration g/l | Trichophyton mentagrophytes | | | Microsporum gypseum | | | Trichophyton rubrum | | |
|---|---|---|---|---|---|---|---|---|---|---|---|
| | | | BW | WO | NY | BW | WO | NY | BW | WO | NY |
| 1 | 045 | 0,2 | 16 | 11 | 12 | 20 | 12 | 14 | 25 | 18 | 7 |
| 2 | 045 | 0,1 | 11 | 8 | 8 | 10 | 10 | 7 | 12 | 10 | 7 |
| 3 | 046 | 0,2 | 13 | 13 | 10 | 16 | 10 | 10 | 12 | 7 | 7 |
| 4 | 046 | 0,1 | 7 | 13 | 5 | 14 | 08 | 8 | 9 | 13 | 4 |
| 5 | 065 | 0,2 | 28 | 28 | 26 | 28 | 25 | 25 | 29 | 28 | 23 |
| 6 | 065 | 0,1 | 26 | 25 | 25 | 26 | 21 | 14 | 25 | 23 | 18 |
| 7 | ohne | ohne | + | + | + | + | + | + | + | + | + |

Bei den antimikrobiellen Substanzen handelt es sich um die folgenden Azolverbindungen:

045 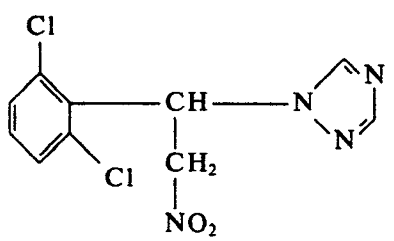

046 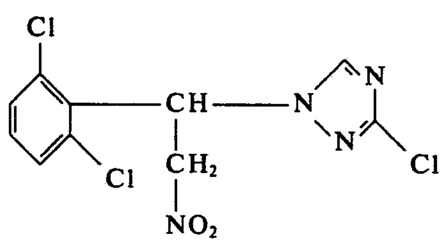

065 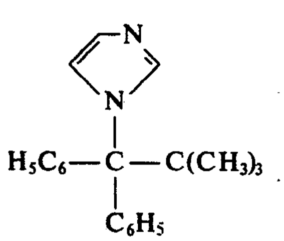

In einer weiteren Versuchsreihe wurden andere Azolverbindungen bei einer Anwendungskonzentration von 1 g/l Behandlungsflotte gemeinsam mit dem Wäschebehandlungsmittel der Beispiele 1 bis 7 (Konzentration 3 g/l Behandlungsflotte) eingesetzt. Auch hier wurde ein Vergleichsversuch ohne Azolverbindung durchgeführt.

| Beisp. Nr. | Anti-mikrob. Subst. | Epidermophyton floccosum | | | Trichophyton mentagrophytes | | |
|---|---|---|---|---|---|---|---|
| | | BW | WO | NY | BW | WO | NY |
| 8 | 001 | 21 | 21 | 7 (12) | 15 (20) | 17 (20) | 9 (12) |
| 9 | 003 | 3 (9) | 10 (17) | (0,5) | 5 (10) | 9 (16) | 0,5 |
| 10 | 009 | 10 (13) | 11 (17) | 5 (10) | 7 (10) | 9 (14) | 10 14) |
| 11 | ohne | + | + | + | 0 | + | + |

Bei den antimikrobiellen Substanzen handelt es sich um die folgenden Azolverbindungen:

001 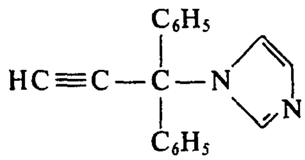

003 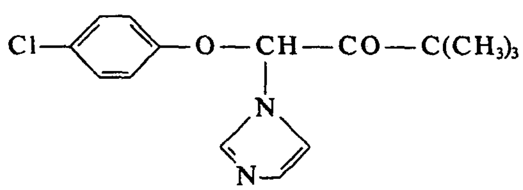

009 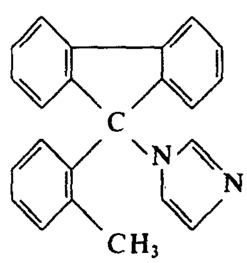

Ähnliche Ergebnisse erhält man, wenn man statt der antimikrobiellen Verbindungen der Beispiele 1 bis 6 und 8 bis 10 andere bekannte antimikrobiell wirksame Azolverbindungen und statt der textilweichmachenden quartären Ammoniumverbindung dieser Beispiele andere quartäre Ammoniumverbindungen für die Durchführung des erfindungsgemäßen Verfahrens verwendet.

**Patentansprüche**

1. Verfahren zum gleichzeitigen Weichmachen und zur antimikrobiellen Ausrüstung von gewaschener Wäsche in wäßriger Flotte, die textilweichmachende quartäre Ammoniumverbindungen und antimikrobiell wirksame Substanzen enthält, durch Einwirkenlassen der Flotte auf Wäschestücke, Abtrennen der Flotte von den Wäschestücken und Trocknen der Wäsche, dadurch gekennzeichnet, daß man die Wäschestücke in einer Flotte, der man zusätzlich zu wenigstens einer üblichen textilweichmachenden quartären Ammoniumverbindung als antimikrobiell wirksame Substanz wenigstens eine Azolverbindung zusetzt, bewegt.

2. Verfahren nach Anspruch 1, dadurch gekennzeichnet, daß man der Behandlungsflotte eine oder mehrere Azolverbindungen aus der Gruppe

a) 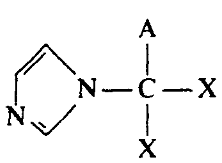 (I)

worin X die Phenylgruppe und A entweder die Gruppe —C≡CH oder die Gruppe —$COOCH_3$ oder die Gruppe —$C(CH_3)_3$ bedeutet,

b) 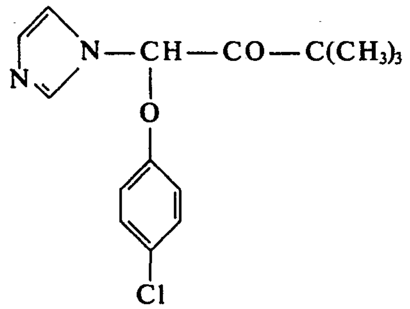 (II)

c) 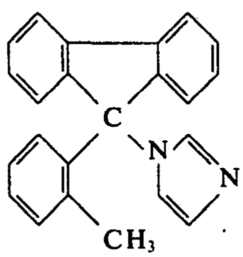 (III)

d) 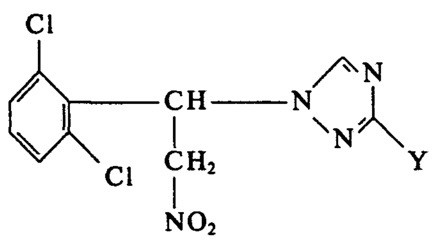 (IV)

worin Y entweder Wasserstoff oder Chlor bedeutet,

zusetzt.

3. Verfahren nach den Ansprüchen 1 und 2, dadurch gekennzeichnet, daß man die Azolverbindung in der Flotte in Konzentrationen von 0,0001 bis 1,5 Gew.-%, bezogen auf die Behandlungsflotte, auf die Wäsche einwirken läßt.

4. Verfahren nach den Ansprüchen 1 bis 3, dadurch gekennzeichnet, daß man die quartären Ammoniumverbindungen in der Flotte in Konzentrationen von je 0,01 bis 0,5 Gew.-%, bezogen auf die Behandlungsflotte, und die Azolverbindung in Konzentrationen von 0,0001 bis 1,5 Gew.-%, auf die Wäsche einwirken läßt.

5. Verfahren nach den Ansprüchen 1 bis 4, dadurch gekennzeichnet, daß man die quartäre Ammoniumverbindung und die Azolverbindung in der Flotte in einem Gew.-Verhältnis von 50:1 bis 1:3 auf die Wäsche einwirken läßt.

## Claims

1. A process for the simultaneous softening and antimicrobial finishing of washed laundry in an aqueous liquor containing fabric-softening quaternary ammonium compounds and antimicrobially active substances by allowing the liquor to act items of laundry, separating off the liquor from the items of laundry and drying the laundry, characterized in that the items of laundry are moved around in a liquor which, in addition to at least one standard fabric-softening quaternary ammonium compound, contains at least one azole compound as the antimicrobially active substance.

2. A process als claimed in Claim 1, characterized in that one or more azole compounds from the group comprising

a) 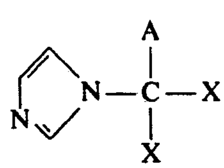 (I)

in which X is the phenyl group and A is either the group —C≡CH or the group —$COOCH_3$ or the group —$C(CH_3)_3$,

b) 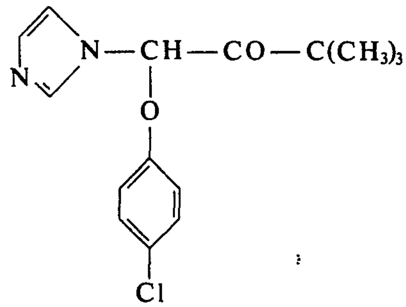 (II)

c) 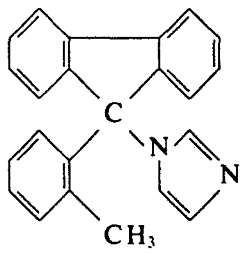 (III)

d) 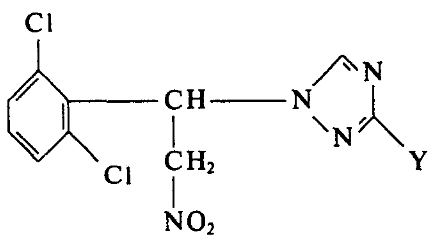 (IV)

in which Y is either hydrogen or chlorine,

is/are added to the treatment liquor.

3. A process as claimed in Claims 1 and 2, characterized in that the azole compound in the liquor is allowed to act on the laundry in concentrations of from 0.0001 to 1.5% by weight, based on the treatment liquor.

4. A process as claimed in Claims 1 to 3, characterized in that the quaternary ammonium compounds in the liquor are allowed to act on the laundry in concentrations of from 0.01 to 0.5% by weight in each case, based on the treatment liquor, and the azole compound in concentrations of from 0.0001 to 1.5% by weight.

5. A process as claimed in Claims 1 to 4, characterized in that the quaternary ammonium compound and the azole compound in the liquor are allowed to act on the laundry in a ration by weight of from 50:1 to 1:3.

**Revendications**

1. Procédé pour l'assouplissement et pour l'apprêtage antimicrobien simultanés du linge lavé en bain aqueux, qui contient des composés d'ammonium quaternaire assouplissants des textiles et des substances à activité antimicrobienne, par action du bain sur les pièces de linge, séparation du bain d'avec les pièces de linge et séchage du linge, caractérisé en ce qu'on remue les pièces de linge dans un bain auquel, en plus d'au moins un composé usuel d'ammonium quaternaire assouplissant des textiles, on ajoute comme substance à activité antimicrobienne au moins un compose azol.

2. Procédé selon la revendication 1, caractérisé en ce qu'on ajoute au bain de traitement un ou plusieurs composés azol du groupe:

a) 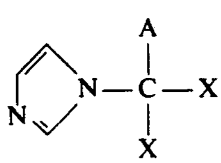 (I)

dans laquelle X signifie le groupe phényle et A soit le groupe —C≡CH, ou le groupe —$COOCH_3$, ou le groupe —$C(CH_3)_3$,

b) 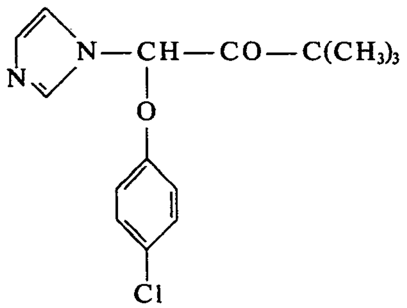 (II)

c) 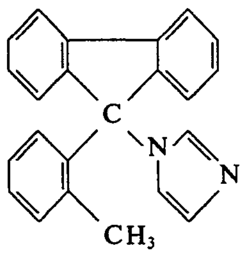 (III)

d) 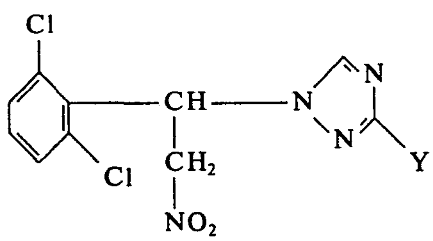 (IV)

dans laquelle Y signifie de l'hydrogène ou du chlore.

3. Procédé selon les revendications 1 et 2, caractérisé en qu'on fait agir sur le linge le comosé azol dans le bain à des concentrations de 0,0001 à 1,5% en poids par rapport au bain de traitement.

4. Procédé selon les revendications 1 à 3, caractérisé en ce qu'on fait agir sur le linge les composés d'ammonium quaternaire dans le bain à des concentrations chaque fois de 0,01 à 0,5% en poids par rapport au bain de traitement et le composé azol à des concentrations de 0,0001 à 1,5% en poids.

5. Procédé selon les revendications 1 à 4, caractérisé en ce qu'on fait agir sur le linge le composé d'ammonium quaternaire et le composé azol dans le bain à un rapport pondéral de 50:1 a 1:3.